# EUROPÄISCHE PATENTSCHRIFT

(11) **EP 1 352 319 B1**
(45) Veröffentlichungstag und Bekanntmachung des Hinweises auf die Patenterteilung: **11.07.2007**
(21) Anmeldenummer: 02703493.3
(22) Anmeldetag: 16.01.2002
(51) Int. Cl.: G06F 9/30

(54) **VERFAHREN ZUR ERHÖHUNG DER SICHERHEIT EINER CPU**
METHOD FOR INCREASING THE SECURITY OF A CPU
PROCEDE PERMETTANT D'ACCROITRE LA SECURITE D'UNE UNITE CENTRALE

(30) Priorität: 17.01.2001 DE 10101956
(43) Veröffentlichungstag der Anmeldung: 15.10.2003
(73) Patentinhaber: Infineon Technologies AG, 81669 München (DE)
(72) Erfinder: HARTLIEB, Heimo, A-8055 Graz (AT); SEDLAK, Holger, 85658 Egmating (DE); KLUG, Franz, 81737 München (DE)
(74) Vertreter: Epping - Hermann - Fischer
(86) Internationale Anmeldenummer: PCT/DE2002/000110
(87) Internationale Veröffentlichungsnummer: WO 2002/057905

(56) Entgegenhaltungen:
- WO-A-00/50977
- DE-A- 19 936 939
- US-A- 6 108 797
- PATENT ABSTRACTS OF JAPAN vol. 1999, no. 13, 30. November 1999 (1999-11-30) & JP 11 232092 A (NIPPON TELEGR &TELEPH CORP <NTT>), 27. August 1999 (1999-08-27)

## Beschreibung

Die vorliegende Erfindung betrifft ein Verfahren zur Verbesserung der Sicherheit einer CPU.

Differential Power Analysis (DPA) ist ein bekanntes Angriffsszenario für Sicherheits-CPUs. Bei einem solchen Angriff wird eine Folge von Programmbefehlen und deren Auswirkungen in der CPU mittels statistischer Auswertungen der Kennlinien des Stromverbrauchs ermittelt. Aus diesen Auswertungen lassen sich detaillierte Rückschlüsse über das ausgeführte Programm gewinnen.

In der DE 199 36 939 A1 und der WO 00/50977 sind Verfahren beschrieben, mit denen insbesondere für eine Anwendung bei Chipkarten eine DPA dadurch erschwert wird, dass nur zur Täuschung vorgesehene Rechenoperationen beziehungsweise Programmschritte durchgeführt werden, die nach einer zufälligen Auswahl in die Programmabläufe eingeschleust werden.

Bei dem in der WO 00/50977 beschriebenen Verfahren werden in einer Folge von Programmschritten an zufälligen Stellen simulierte Operationen gleichen Typs eingefügt, die im Rahmen der Ausführung des Algorithmus liegen. Die simulierten Operationen dienen zur Verschleierung des Dateninhaltes, indem ungültige Berechnungen oder dergleichen ausgeführt werden, damit physikalische Größen, die insbesondere im Bereich eines Anschlusses der Spannungsversorgung der Schaltung detektiert werden können, keine Rückschlüsse auf den tatsächlichen Dateninhalt zulassen. Eine simulierte Operation kann in Hinsicht auf die beobachtbaren physikalischen Größen, die mit der Ausführung dieser Anweisung verbunden sind, (Stromverbrauch, magnetische Strahlung etc.) einem Programmschritt gleich oder praktisch sehr ähnlich sein.

Es wird in dieser Schrift außerdem vorgeschlagen, eine konstante Zeitspanne zwischen der Ausführung zweier Operationen vorzusehen. Auf diese Weise erscheint die Einfügung der simulierten Operationen nicht in offensichtlicher Weise bei einer zeitlichen Untersuchung der elektrischen Signale, die mit den Programmschritten des eigentlichen Algorithmus verbunden sind. Die Anzahl der eingefügten simulierten Operationen kann außerdem für jede neue Ausführung des Algorithmus konstant sein, so dass die Ausführung des Algorithmus in seiner Gesamtheit jedesmal dieselbe Zeit beansprucht. Die Tatsache, dass simulierte Operationen eingefügt sind, bleibt so einer ersten Analyse verborgen.

Aufgabe der vorliegenden Erfindung ist es, ein Verfahren zur Erhöhung der Sicherheit einer CPU anzugeben.

Diese Aufgabe wird mit dem Verfahren mit den Merkmalen des Anspruches 1 gelöst. Ausgestaltungen ergeben sich aus den abhängigen Ansprüchen.

Bei dem erfindungsgemäßen Verfahren wird eine als Pipeline aufgebaute CPU mit mindestens einer Decodierstufe und einer Rückspeicherstufe verwendet, die typisch eine Ladestufe (Fetch Stage), eine Decodierstufe (Decode Stage), eine Ausführungsstufe (Execute Stage) und eine Rückspeicherstufe (Writeback Stage) umfasst. Die Rückspeicherstufe besitzt mindestens ein Register, bei dessen Benutzung keine Zustandsänderung der CPU erfolgt, und mindestens ein Register, bei dessen Benutzung eine Zustandsänderung der CPU erfolgt. Erfindungsgemäß wird in der Decodierstufe mindestens eine zufällig ausgewählte Codesequenz als Platzhalter-Code oder Füllsel eingefügt. Dieses Verfahren ist im Prinzip für beliebige Pipelines anwendbar, die insbesondere zusätzlich zu den als Beispiel angegebenen Stufen über weitere Stufen verfügen können, und wird anhand der beigefügten Figuren näher erläutert.

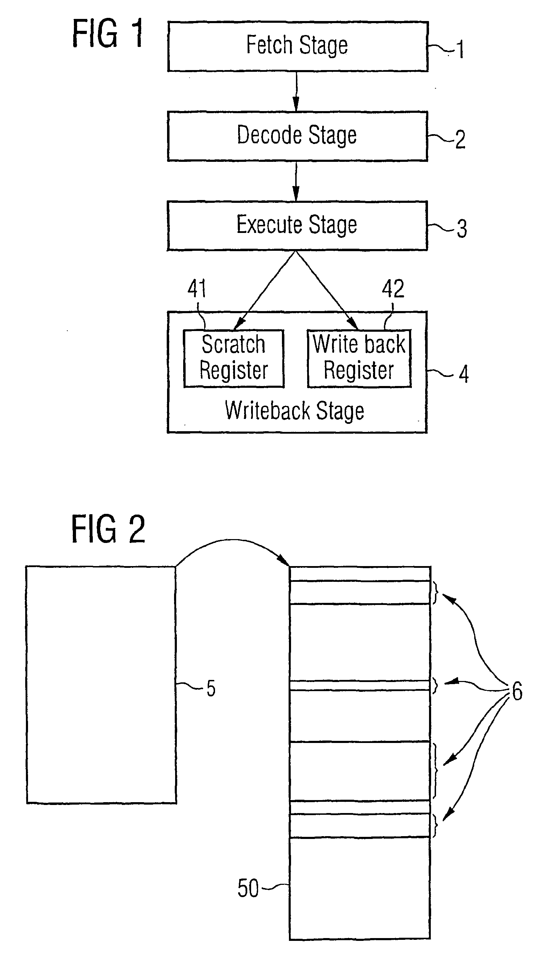

Die Figur 1 zeigt ein Diagramm der beschriebenen Pipeline. Die Figur 2 zeigt ein Schema für das Vorgehen beim Einfügen der Codesequenzen.

In der Figur 1 ist ein Ablaufdiagramm dargestellt, das den Programmablauf von der Ladestufe 1 über die Decodierstufe 2 in die Ausführungsstufe 3 und von dort in die Rückspeicherstufe 4 einer als Beispiel dargestellten Pipeline zeigt. Die Rückspeicherstufe 4 besitzt hier mindestens ein erstes Register 41 als Scratch-Register und ein zweites Register 42 als Writeback-Register. Das Scratch-Register ist ein Register, bei dessen Benutzung keine Zustandsänderung der CPU erfolgt, während bei der Benutzung des Writeback-Registers eine Zustandsänderung der CPU erfolgt. Zur Erhöhung der Sicherheit der CPU wird von der Decodierstufe 2 eine Codesequenz, und zwar im Prinzip eine beliebige Codesequenz, in den Programmcode, der in der Pipeline übermittelt wird, eingeschleust. Es ist auch möglich, an mehreren Stellen des Programmcodes eine jeweilige zusätzliche Codesequenz als Platzhalter oder Füllsel (dummy code sequence) einzufügen. Das ist in der Figur 2 im Schema dargestellt.

Die Figur 2 zeigt im Schema eine Codesequenz 5 eines beliebigen Programms. In dieser Codesequenz 5 werden zufällig ausgewählte Codesequenzen 6 (Dummy-Sequenzen) an verschiedenen vorgegebenen oder ebenfalls zufällig ausgewählten Stellen eingefügt, so dass sich die erweiterte Codesequenz 50 ergibt. Die eingefügten Codesequenzen können zum Beispiel aus einem Speicher, insbesondere aus einem ROM, ausgelesen werden.

Die einzelnen Befehle zum Einfügen von Codesequenz können beispielsweise durch den Abruf von Adressen, die ein Zufallszahlengenerator erzeugt, generiert werden. Die einzufügenden Codesequenzen werden aus dem Speicher ausgelesen und an den Decoder in zufälliger Länge und Reihenfolge übermittelt. Der Decoder schleust den Code dieser Dummy-Codesequenzen in den laufenden Programmcode (Codestream) ein. Auch die Adressen, an denen der zufällig ausgewählte Code in den Programmcode eingeschleust wird, können mit einer an sich bekannten Zufallsmethode ermittelt werden.

Durch die zufallsbedingt eingefügte Codesequenz oder die mehreren zufällig ausgewählten und eingefügten Codesequenzen, die nur als Platzhalter oder Füllsel fungieren, wird keine Zustandsänderung der CPU hervorgerufen. Ein wesentlicher Vorteil dieses Verfahrens ist dabei, dass sich die Ausführungszeit des eigentlichen Programmcodes bei jedem Durchlauf desselben Programms gegenüber den vorhergehenden Durchläufen beliebig verändern lässt und dadurch ein Angriffsversuch, welchem statistische Auswertungen zugrunde liegen (wie zum Beispiel der eingangs erwähnten DPA), wesentlich erschwert ist.

### Bezugszeichenliste

- 1: Ladestufe
- 2: Decodierstufe
- 3: Ausführungsstufe
- 4: Rückspeicherstufe
- 5: Codesequenz
- 6: zufällig ausgewählte Codesequenz
- 41: erstes Register (Scratch-Register)
- 42: zweites Register (Writeback-Register)
- 50: erweiterte Codesequenz

## Patentansprüche

1. Verfahren zur Erhöhung der Sicherheit einer CPU, **dadurch gekennzeichnet, dass** eine Pipeline aus mindestens einer Decodierstufe (2) und einer Rückspeicherstufe (4) mit mindestens einem ersten Register (41), bei dessen Benutzung keine Zustandsänderung der CPU erfolgt, und mit mindestens einem zweiten Register (42), bei dessen Benutzung eine Zustandsänderung der CPU erfolgt, eingesetzt wird, und
dass in der Decodierstufe (2) mindestens eine zufällig ausgewählte Codesequenz (6) als Platzhalter-Code oder Füllsel eingefügt wird, die keine Zustandsänderung der CPU bewirkt, und zusätzliche Mittel vorhanden sind, die dafür vorgesehen sind, sicherzustellen, dass bei jedem Durchlauf eines bestimmten Programms eine als Platzhalter-Code oder Füllsel verwendete und zufällig ausgewählte Codesequenz (6) derart ausgewählt wird, dass eine jeweils von vorhergehenden Programmdurchläufen verschiedene Ausführungsdauer des Programms bewirkt wird.

2. Verfahren nach Anspruch 1, bei dem
eine oder mehrere zufällig ausgewählte Codesequenzen (6) aus einem Speicher anhand einer bzw. mehrerer zufällig ermittelter Speicheradressen ausgelesen werden.

3. Verfahren nach Anspruch 2, bei dem als Speicher ein ROM verwendet wird.

## Claims

1. Method for increasing the security of a CPU **characterized in that** a pipeline is used, having at least one decode stage (2) and one writeback stage (4) that contains at least one first register (41) whose use does not result in any state change of the CPU, and at least one second register (42) whose use does result in a state change of the CPU, and **in that** at least one randomly selected code sequence (6) that does not cause a state change of the CPU is inserted in the decode stage (2) as placeholder code or dummy code sequence, and
additional means exist that are provided in order to ensure that, for each run of a specific program, a randomly selected code sequence (6) used as placeholder code or dummy code sequence is selected so as to obtain a program execution time that is different from previous program runs on each occasion.

2. Method according to Claim 1, in which one or more randomly selected code sequences (6) are read from a memory using one or more randomly determined memory addresses.

3. Method according to Claim 2, in which a ROM is used as memory.

## Revendications

1. Procédé d'augmentation de la sécurité d'une CPU, **caractérisé en ce que** l'on utilise un pipeline constitué d'au moins un étage de décodage (2) et d'un étage de récriture (4) comportant au moins un premier registre (41) pendant l'utilisation duquel aucune modification d'état de la CPU n'est effectuée, et au moins un deuxième registre (42) pendant l'utilisation duquel on effectue une modification de l'état de la CPU, et **en ce que** au moins une séquence de code (6) choisie aléatoirement est insérée dans l'étage de décodage (2) sous la forme d'un code de joker ou d'un élément de remplissage qui ne provoque pas de modification de l'état de la CPU, et il est prévu des moyens supplémentaires qui sont destinés à garantir qu'une séquence de code (6), choisie aléatoirement et utilisée comme code de joker ou comme élément de remplissage, est choisie à chaque exécution d'un programme déterminé de façon à avoir une durée d'exécution du programme qui est différente de celle des exécutions de programme précédentes.

2. Procédé selon la revendication 1, dans lequel une ou plusieurs séquences (6), choisies aléatoirement, sont lues dans une mémoire en se référant à une ou plusieurs adresses de mémoire déterminées aléatoirement.

3. Procédé selon la revendication 2, dans lequel la mémoire utilisée est une ROM.
